(19) Europäisches Patentamt / European Patent Office / Office européen des brevets

(11) **EP 3 510 804 B1**

(12) **EUROPEAN PATENT SPECIFICATION**

(45) Date of publication and mention
of the grant of the patent:
**18.08.2021 Bulletin 2021/33**

(51) Int Cl.:
*H04W 16/12* (2009.01)     *H04W 24/02* (2009.01)
*G06F 9/50* (2006.01)     *H04W 16/08* (2009.01)
*H04W 88/08* (2009.01)

(21) Application number: **17772768.2**

(22) Date of filing: **30.08.2017**

(86) International application number:
**PCT/IB2017/055196**

(87) International publication number:
**WO 2018/047038 (15.03.2018 Gazette 2018/11)**

(54) **APPARATUS AND METHOD FOR DYNAMICALLY ASSIGNING CELLS OF REMOTE RADIO UNITS TO COORDINATION SETS OF BASEBAND UNITS FOR OPTIMIZING INTERCELL COORDINATION AND PERFORMANCE**

VORRICHTUNG UND VERFAHREN ZUR DYNAMISCHEN ZUWEISUNG VON ZELLEN VON ENTFERNTEN FUNKEINHEITEN ZU KOORDINATIONSSÄTZEN VON BASISBANDEINHEITEN ZUR OPTIMIERUNG DER ZELLÜBERGREIFENDEN KOORDINATION UND LEISTUNG

APPAREIL ET PROCÉDÉ D'AFFECTATION DYNAMIQUE DE CELLULES D'UNITÉS RADIO DISTANTES À DES ENSEMBLES DE COORDINATION D'UNITÉS EN BANDE DE BASE POUR OPTIMISER LA COORDINATION INTER-CELLULES ET LES PERFORMANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2016 US 201662393495 P**
**06.04.2017 US 201715481212**

(43) Date of publication of application:
**17.07.2019 Bulletin 2019/29**

(73) Proprietor: **Telefonaktiebolaget LM Ericsson (publ)**
**164 83 Stockholm (SE)**

(72) Inventors:
• **AL-FANEK, Issa**
**Montreal, Québec H4P 2N2 (CA)**
• **SHIRAZIPOUR, Meral**
**Santa Clara, California 95054 (US)**
• **GRANT, Stephen**
**Pleasanton, California 94566 (US)**
• **DAS, Pratik**
**Centennial, Colorado 80112 (US)**
• **SAMMAN, Omar**
**Irvine, California 92602 (US)**
• **KENEHAN, Noel**
**113 49 Stockholm (SE)**

(74) Representative: **Ericsson**
**Patent Development**
**Torshamnsgatan 21-23**
**164 80 Stockholm (SE)**

(56) References cited:
**US-A1- 2011 105 184     US-A1- 2014 031 049**

**Description**

**TECHNICAL FIELD**

Embodiments of the invention relate to the field of radio access networks ("RAN"), and more specifically, to an apparatus and methods for optimizing assignment of cells (or sector carriers) to at least one coordination set ("C-Set") associated with at least one baseband processing unit ("BBU"), as captured in the appended claims.

**BACKGROUND**

In a conventional radio base transceiver station ("BTS"), the radio head and baseband unit ("BBU", also referred to as a digital unit ("DU")) are combined in a single chassis or platform, such as in an eNodeB. A BTS can include media access control (MAC) and physical layer (PHY) processing elements such as MAC layer processor, a channel coder, a channel interleaver, a channel modulator, a multiple-input, multiple-output ("MIMO") processor, a transmit power controller, a frame and slot signal generator, an inverse fast Fourier transform (IFFT) modulator a cyclic prefix ("CP") adder, a channel filter, an analog-to-digital ("DAC") converter, an up converter, a gain controller, a carrier multiplexer, a power amplifier and limiter, radio frequency filters and one or more antennas.

Functionally, a radio head contains the base station radio frequency ("RF") circuitry plus analog-to-digital and digital-to-analog converters and up/down converters. The radio head may also include operation and management processing capabilities. The BBU provides radio functions of the digital baseband domain and thus is sometimes referred to as a digital unit ("DU").

A coordinated radio access network is a cellular network design in which the radio head, referred to in a coordinated RAN as a radio remote unit ("RRU") is physically separated from the baseband processing unit ("BBU") so that the BBU can be centralized and/or distributed depending on the network planning and design constraints. Functionality found in the RRU includes decoding, de-interleaving and demodulation, using modules therefore. Often, the RRU is coupled to the BBU using an optical fiber with a common public radio interface ("CPRI") defining an interface between the RRU and BBU. Each RRU typically serves a cell, the cell being a spatial expanse into which terminals, user equipment and/or transceiver units communicate with the RRU (collectively referred to as a "UE"), and hence the network to which the RRU is coupled via the BBU. Notwithstanding the foregoing, it is noted that an RRU may have multiple cells, and multiple cells may be comprised of multiple RRUs. Hence, reference to a cell assignment and/or RRU assignment herein shall not be considered a limitation, and reference to one shall be considered a reference to the other as the invention is broad enough to cover each context.

United States patent application US 2011/0105184 discloses a method, an apparatus and a computer program product for configuring remote antenna units with communication properties in a radio access communication system. United States patent application US 2014/003049 discloses a wireless communications system.

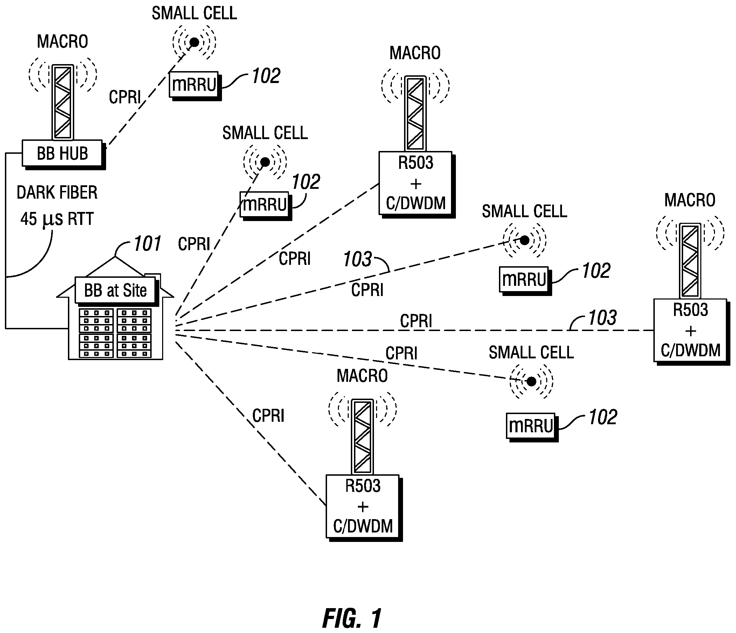

As seen in Figure 1, a number of centralized BBUs can be located at a BB Hub 101, sometimes referred to as a BB hotel, and each BBU is coupled to a plurality of RRUs 102 via a CPRI interface 103. The plurality of RRUs 102 and/or cells associated to a particular BBU are coordinated by such BBU in a coordination set ("C-Set"). Each BBU is constrained in the number of RRUs to which it can be coupled, such constraint dictated by, among other things, the number of ports available at each BBU and the processing power of the BBU.

Conventionally, RRUs are coupled to a specific BBU, such RRU (cell) is included in a BBU's C-Set. What is desired is an ability to dynamically coordinate cells among different BBUs to optimize the performance and efficiency of a network comprised of multiple RRUs and multiple BBUs. To perform such coordination, a method of assigning a cell to a C-Set of a BBU is necessary.

There are a number of benefits of dynamically coordinating RRUs to specific C-Sets of a BBU. In the uplink ("UL") from a UE to a RRU in a coordinated multi-point ecosystem ("CoMP") coordination increases UE UL throughput by taking advantage of spatial diversity and interference suppression, which can, in turn, reduce required UE transmit power in the UL.

In CoMP, the number of cells assigned to a C-Set is limited. This is due to the limited capacity and processing of a single BBU and time/delay constraints between BBUs. For example, in UL CoMP the BBU has to evaluate each cell for a given UE in a short period of time.

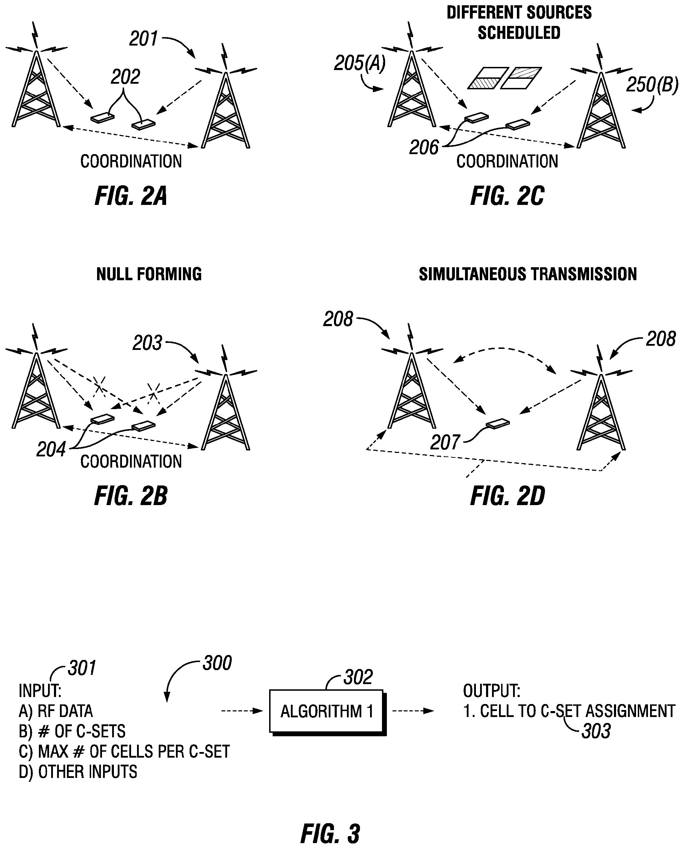

Figures 2(a)-(d) illustrate four (4) sub-scenarios in the conventional downlink ("DL") CoMP scenario. In general, DL CoMP utilizes information on transmissions from interfering RRUs (cells) to improve the DL performance using coordinated link adaptation. It is further desired that coordinating RRUs (cells) among BBUs will improve the received signal quality and strength resulting in more efficient use of the channel.

Figure 2(a) is a conventional DL Coordinated Link Adaptation 201 and consists of a pre-set number of UEs 202 that maintain SINR between two (2) defined values for a defined set period of time selected by the DL CoMP and configured with specific DL CoMP parameters. RSRP reporting is enabled for UEs 202 that suffer from poor SINR.

Coordination by the BBU consists of identifying potential interference emanating from other cells and exploiting opportunities for enhanced link adaptation in each transmission time interval ("TTI"). TTI level interference information is input to the normal link adaptation and scheduling.

Figure 2(b) illustrates the use of beam forming by eNodeBs 203 in a coordinated fashion to reduce interference to UEs 204.

Figure 2(c) illustrates the use of dynamic point selection or muting. The eNodeBs 205(a)-(b) coordinate to avoid transmitting on the same time-frequency resource to the UEs 206. The serving eNodeB 205(a) notifies the other cooperating eNodeBs 205(b) over the X2 interface and causes them to mute for the resources that the UE intends to use.

Figure 2(d) illustrates data being transmitted to a UE 207 simultaneously from a number of different eNodeBs 208 to improves the received signal quality and strength.

Presently, there is no efficient method to determine the best combination of cells to C-Set assignment. The problem is partially attributable to the current use of known algorithms for assignments of elements to a set or pairing assignments. Unlike the stable roommates problem (SRP), it is desired to assign up to N cells to the same C-Set, while taking into account that in a preferred solution the number of RRUs (cells) per C-Set is not constant and also the number of C-Sets can be variable.

Further, using a brute force mathematical program to optimally assign RRUs (cells) to C-Sets is not feasible due to the large number of cells and large number of C-Sets. Such methods, as proven NP-hard, are not efficient. What is desired are well-defined heuristic methods for finding good sub-optimal solutions in a reasonable amount of time using a reasonable amount of compute resources with the objective to optimally assign cells to coordinated BBUs to maximize coordination benefits.

## SUMMARY

An embodiment of the invention is an apparatus and method to perform assignment of a plurality of cells to a coordination set ("C-Set") associated with at least one BBU, to optimize the overall performance of a network. The method, as implemented in an embodiment, is based on a greedy algorithm and uses (1) score variables, (2) cell_score function, and variations thereof and (3) the evaluation scores, and variations thereof to determine C-Set assignments for an overall improvement of network performance. In a further embodiment, evaluation scores are used to evaluate the overall cell to C-Set assignment and then compare such assignment with an alternative assignment. Exact search methods are not an option because this problem is NP-hard and does not scale for large size problems.

The claimed process is implementable in one or more software modules comprised of executable software code processed by a microprocessor. As used herein, the hardware and software module or modules used to implement the claimed process is referred to collectively as a C-Set assignment processing circuit or C-Set assignment module. Preferably, the C-Set assignment processing circuit or C-Set assignment module is resident on a platform within a BBU or a controller operable to control one or a plurality of BBUs and associated RRUs (cells). In an embodiment, the C-Set assignment module comprises a non-transitory machine-readable medium having computer code thereon, which when executed by a set of one or more processors of a network device communicatively coupled to a BBU, causes the BBU to control at least one RRU.

An embodiment of the invention further includes a tool operable to provide a visual rendering of the problem space and solution. The claimed process further uses cell score variables operable to capture the benefit of coordination at cell edges. Moreover, an embodiment is further operable to apply policy, optimization weights, and consideration of network capacity by artificially modifying the cell score variables.

A variety of criteria and factors can be used to assign cells to C-Sets. These include, but are not limited to, load, front-haul capacity and site density. Different weights and thresholds can be used to implement or effect a cell assignment strategy such as maximum number of cells assigned to a C-Set and/or max number of C-Sets.

## BRIEF DESCRIPTION OF THE DRAWINGS

The invention may best be understood by referring to the following description and accompanying drawings that are used to illustrate embodiments of the invention. In the drawings:

Fig. 1 is an illustration of multiple RRUs some coupled to an on-site BBU, others coupled to a BBU hub;
Figs. 2(a)-(d) illustrate four (4) sub-scenarios in the conventional downlink ("DL") CoMP scenario;
Fig. 3 is an abstract view of the method of the invention, illustrating inputs and expected output according to some embodiments of the invention;
Fig. 4 illustrates a cell score parameter used by the method of the invention;
Fig. 5 is an illustrative cell to C-Set assignment setting according to some embodiments of the invention;
Fig. 6 illustrates an output cell_score (list) with 4 cells according to some embodiments of the invention;

Figure 7 is a flow chart of the invention; and

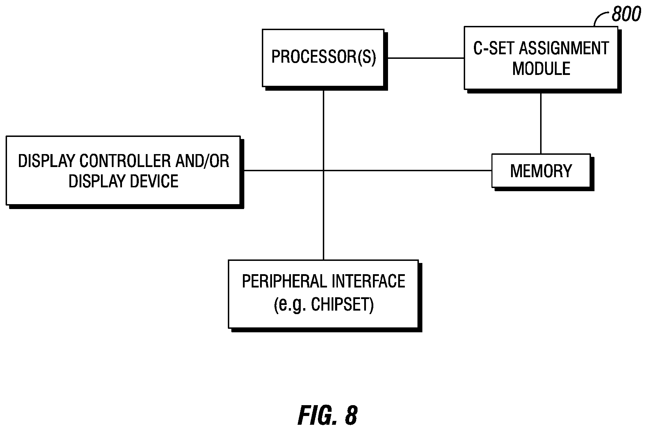

Figure 8 is a device on which the invention is operable.

## DESCRIPTION

The following description describes apparatus and method for assigning a plurality of cells to one or more a C-Sets associated with one or more BBUs according to some embodiments of the invention. The apparatus and method are generally a C-Set assignment processing circuit or C-Set assignment module.

Abbreviations used herein shall mean as follows, unless the context requires otherwise:

3GPP: 3rd Generation Partnership Project
BBU: Baseband processing Unit
CA: Carrier Aggregation
CPRI: Common Public Radio Interface
DL: Downlink (eNodeB to UE)
DL CoMP: Downlink Coordinated MultiPoint
DU: Digital Unit
DUW: Digital Unit Wideband (UMTS, UTRAN)
EPC: Evolved Packet Core
LTE: Long Term Evolution
PCI: Physical-layer Cell Identity
RAN: Radio Access Network
RF: Radio Frequency
RRU: Remote Radio Unit
RSRP: Reference Signal Receive Power
RSSI: Received Signal Strength Indicator
SINR : Signal-to-Interference-plus-Noise Ratio
TTI: Transmission Time Interval
UE: User Equipment
UL: Uplink (UE to eNodeB)
UL CoMP: Uplink Coordinated Multipoint

In the following Figures and description, numerous details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such details. In other instances, control structures, gate level circuits and full software instruction sequences have not been shown in detail in order not to obscure the invention. Those of ordinary skill in the art, with the included descriptions, can implement appropriate functionality without undue experimentation.

References in the specification to "one embodiment," "an embodiment," "an example embodiment," etc., indicate that the embodiment described may include a feature, structure, or characteristic, but every embodiment may not necessarily include the feature, structure, or characteristic. Moreover, such phrases are not necessarily referring to the same embodiment. Further, when a feature, structure, or characteristic is described in connection with an embodiment, it is submitted that it is within the knowledge of one skilled in the art to affect such feature, structure, or characteristic in connection with other embodiments whether explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

The C-Set assignment processing circuit or C-Set assignment module can be embodied in an electronic device. An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices. One or more parts of the embodiments described herein may be implemented using different combinations of software, firmware, and/or hardware.

The C-Set assignment processing circuit or C-Set assignment module can be embodied in a network device. A network device (ND) is an electronic device that communicatively interconnects other electronic devices on the network (e.g., other network devices, end-user devices) to provide inputs into the C-Set assignment processing circuit or C-Set assignment module. Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

The functionality performed by the C-Set assignment processing circuit or C-Set assignment module can be embodied in a cloud or virtualized environment or provided as a service to overlapping or shared operators or enterprises. Cloud computing provides on-demand access to a shared pool of hardware resources such as computing resources, storage resources, and networking resources. Cloud computing allows users to request additional hardware resources when they are needed, and release hardware resources when they are not needed. Cloud computing has become a highly demanded service due to its capability to offer hardware resources on-demand, relatively cheap costs, scalability, accessibility, and high availability.

In an embodiment, the invention is a method to determine the optimal assignment of a cell to a coordination set ("C-Set") associated with at least one BBU. In such embodiment, the method is based on a greedy method that assigns cells one by one to C-Sets based on, *inter alia*, a cell score variable that indicates the benefit of placing particular cells in the same C-Set as further described herein.

Figure 3 is an abstract view of the method of the invention 300, illustrating inputs 301 and expected output 303 according to some embodiments of the invention. As seen therein, the inputs 301 include RF data comprised of data collected from RF prediction data or a live network such as UE measurement from cell traces 301(a). Such RF data may be denoted as longitude 1, latitude 1, PCI1, RSRP1, ...... , longituden, latituden, PCIn, RSRPn; and so on. The number of C-Sets 301(b) is determined based on number of BBUs. For example, 60 BBUs in a BB hub. The number of C-Sets used may start with a lower number which can be increased as needed as further noted below. The maximum number of cells per C-Set 301(c) is determined based on hardware. For example, a limited number of cells are allowed per BBU or DU. Other inputs 301(d) comprise policy data and other domain expertise data that could influence the claimed method, such as adding weights to certain cell score functions or preventing certain cells from being coordinated together.

A method of the invention used in Figure 3, block 302 is a greedy algorithm. A greedy algorithm solves a problem heuristically by making a locally optimal choice at each stage of its analysis with the hope of finding a global optimum. Greedy algorithms are ideal for problems which have an optimal substructure. For many simple problems, the best suited algorithms are greedy algorithms. The output 303 is an assignment of a cell to a C-Set.

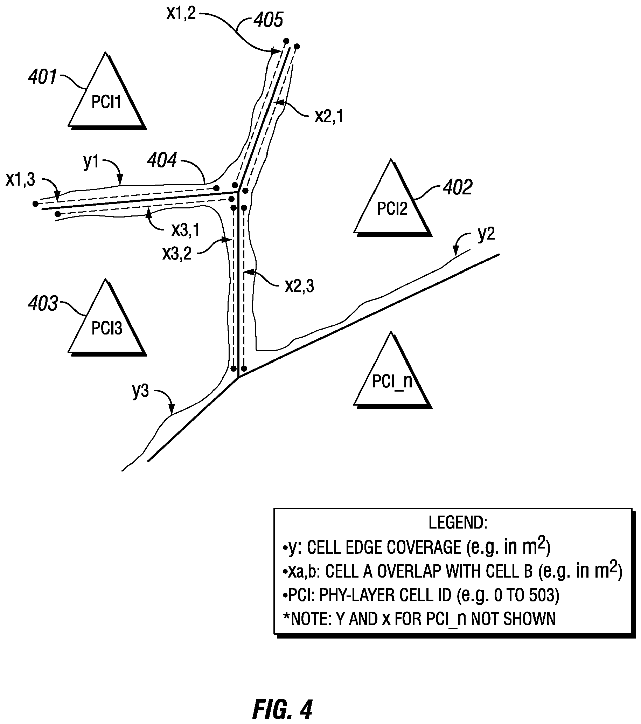

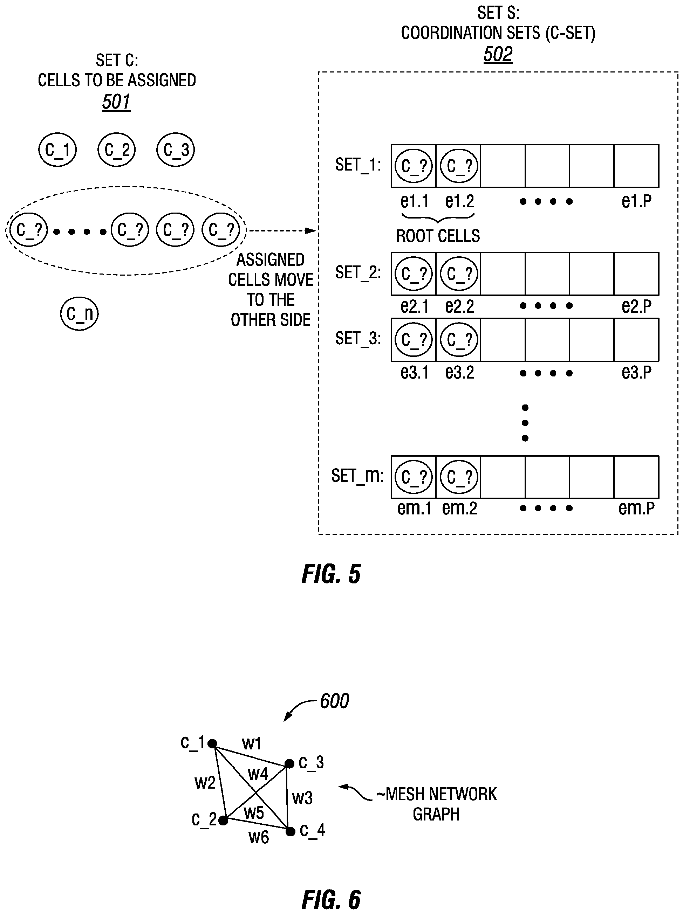

Figures 4 and 5 illustrate key concepts used in various steps of the claimed method.

Figure 4 graphically illustrates how the cell score variable is calculated. The cell score is the relative coordination set score:

$$\text{Score is a percentage:}$$
$$S\_PCI_{1,2} = \frac{x1,2}{y1}$$

This value is computed for each cell with respect to each of its neighboring cells. For example, as shown in Figure 4, cell PCI1 401 has two neighboring cells PCI2 402 and PCI3 403. The variable y1 404 denotes the total cell edge for cell PCI1 401. The variable x1,2 405 denotes the overlap of the cell edges between cell PCI1 401 with respect to cell PCI2 402. The cell score variable for cell PCI1 401 with respect to cell PCI2 402 is denoted as S PCI1,2. S PCI1,2 is computed as the ratio of overlap of cell PCI1 401 with cell PCI2 402 (x1,2) and the total cell PCI1 401 edge coverage (y1).

The first step of the claimed method as implemented in a C-Set assignment processing circuit or C-Set assignment module is score computation. As seen in Figure 4 and described above, the score S_PCIa,b is computed for all cells a and b in set C. Cells that are not correlated with any other cells from set C are removed. For each score, MAX (S_PCIa,b; S_PCIb,a) is taken only if it is above a given threshold φ. Otherwise, it is set to zero. For example, S_PCI1,2 > S_PCI2,1 and S_PCI1,2 >= φ, then this value is used for both S_PCI1,2 and S_PCI2,1. If S_PCI1,2 < φ, then both S_PCI1,2 and S_PCI2,1 are set to zero.

Other inputs to the score computation of the claimed method as implemented in a C-Set assignment processing circuit or C-Set assignment module includes network capacity, policy, and weight. These could be applied after the initial computation to adjust the cell scores. For example, if the front-haul capacity is not available to have two cells connect to the same C-Set, the score is set to zero. However, available capacity could be used to determine what weight to apply to the cell score.

A further embodiment of the claimed method applies weights to increase or decrease the value of a cell score. This could be implemented to enhance or optimize network performance in certain areas having unusual or non-conventional traffic patterns such as access point hot spots, flash crowds and areas served mainly for non-mobile machine type communications ("MTC").

A further embodiment of the claimed method applies policy to adjust certain cell scores. This is implemented to increase the performance for a spatial extent serving specific end users such as public safety employees and government employees. Similarly, lower requirement applications such as certain MTC applications in a given area may be given lower coordination weight based on policy.

As previously noted, cells can be grouped or assigned C-Sets in the claimed method as implemented in a C-Set assignment processing circuit or C-Set assignment module based on load, front-haul capacity, site density and other criteria. The C-Set assignments can be used to determine different weights, thresholds, or dictate the strategy to use for the C-Set assignments such as maximum number of cells assigned to a C-Set and max number of C-Sets.

The second step of the claimed method as implemented in a C-Set assignment processing circuit or C-Set assignment module is initialization. As seen in Figure 5, the problem set is initialized with all cells initially in the set C on the left side 501. The C-Sets are in set S on the right side 502, where Set_1 to Set_m are empty at this stage, that is, no cells from set C are assigned to any C-sets in set S. The steps three, four and five described below are based on a greedy heuristic that make use of the cell score values and the "cell_score" function described in Figure 6 to optimally assign the cells of Set C 501 to the C-Sets 502. Other heuristics or variations of the greedy heuristic can be implemented using the same cell score value and cell_score function concept.

The third step of the claimed method as implemented in a C-Set assignment processing circuit or C-Set assignment module is assignment of each cell to a C-Set. This comprises assigning a cell (C_1 to C_n) to the first element (e1.1 to em.1) position of each C-Set (Set_1 to Set_m) as shown in Figure 5. This process can be described as follows: For C-set element e1.1 to em.1 assignment (called Root cell 1): the greedy algorithm will assign the cells that have the lowest score with respect to each other.

(a) For position e1.1 to em.1, select the cells that have the lowest score with each other using a greedy algorithm. The function cell_score() is used determine the cell_score of given cells with respect to each other with reference to the graph 600 of Figure 6:

$$\text{cell\_score() returns } \frac{sqrt(w1^2 + w2^2 + w3^2 + w4^2 + w5^2 + w6^2)}{6}$$

where

$$w1 = \text{MAX}(S\_PCI_{1,3} + S\_PCI_{3,1})$$,

and so on with respect to w2...w6.

(b) Use function cell_score() determines the score for each group of cell:

(c) For Set_1: e.1.1 select a cell randomly. The first C-Set's Root cell 1 is selected randomly or using a seed value.

(d) For Set_2: e.2.1 select the cell among n-1 remaining cells which gives the lowest cell_score() value with respect to e.1.1. This is done by calling the function cell_score multiple times with each of the remaining cells. Assume C_1 was assigned as e1.1. This step will call the cell_score() function as follows: v1 = cell_score(C_1, C_2); v2 = cell_score(C_1, C_3), v3 = cell_score(C_1, C_4)......vn-1= cell_score(C_1,C_n). Each time, cell_score() will return a value v as seen in Figure 6. The lowest value of v1 to vn-1 will determine the cell that will be assigned to e2.1 position. For example, if v3 is the lowest in the example above, then C_3 will be assigned to position e2.1

(e) For Set_3: e.3.1 select the cell among n-2 remaining cells which gives the lowest cell_score() value with respect to e.1.1 and e.2.1. Similarly to that described in the immediately preceding paragraph, assuming e1.1 was assigned to C_1 assigned and e2.1 was assigned to C_3, then to determine which cell is assigned to position e3.1, the cell_score function is called as v1= cell_score(C_1, C_3, C_2), v2= cell_score(C_1, C_3, C_4), v3= cell_score(C_1, C_3, C_5)....... vn-2= cell_score(C_1, C_3, C_n). Similarly, the lowest value of v1 to vn-2 will determine the cell assigned to e3.1 position.

(f) This process continues until all e1.1 to em.1 positions are filled with a cell.

This cell_score() function is used throughout the algorithm to determine which un-assigned cell to assign to a given C-Set.

Most steps of the algorithm will use the cell_score() function before adding a cell and call the function again with the to be added cell to determine if the cell score was decreased, increased, left the same and by how much.

In other embodiments, the cell_score() function could consider the last parameter as the one being evaluated and return as result the effect on the output as described below.

In a step function cell_score(list), the cell_score() function is called with a list of cells as input.

In a step //Input: list of cells, all input parameters to the function have been assigned cells. Thereafter, the function is called again with the additional cell and the function will determine the new cell_score value.

In a step //Output: score value, a value v is returned which is the root mean square (RMS) of the S_PCI values of all the cells given as input.

As shown in Figure 6, the maximum S_PCI is selected between each pair of cells and depicted as w. If the number of parameters to function cell_score() is M then *(M\*(M-1))/2* w values are computed and the function returns the square root of the sum of the square of w values divided by *(M\*(M-1))/2.*

The fourth step of the claimed method as implemented in a C-Set assignment processing circuit or C-Set assignment module is to further select and assign cells to C-Sets comprising assigning remaining cells in a C-set to the second element (e1.2 to em.2) position of each C-Set (Set_1 to Set_m).

For C-Set element e1.2 to em.2 assignment (called Root cell 2) the greedy algorithm will assign the cells that have the highest score with respect to the cell that previously was assigned in Root cell 1.

For position e 1.2 to em.2, the cells from set C that have the highest score with the cell already assigned in e1.1 to e.m.1 respectively are selected, by using function cell_score() again.

The score of a set using function cell_score() is computed. For each C-Set, the function cell_score() is called with two parameters: the cell assigned in Root cell 1 and each of the remaining cells in C-Set (n-m cells remaining initially). For example, for Set_1, seen in the example above, example C_1 was assigned to position e1.1. The function is called as v1= cell_score(C_1, C_?) ...vn-m = cell_score(C_1, C_?). The value v with the highest score will determine which cell will be assigned to position e1.2. The same steps are repeated for each of the remaining C-Sets (Set_2 to Set_m). While the foregoing example of how the cell_score() function is used to determine the subsequent cells for each C-Set, it should be realized that extensions and alternatives may use variations of this heuristic, for example to look for a global optimal (rather than greedy approach) on how to assign the Root cell 2.

The fifth step of the claimed method as implemented in a C-Set assignment processing circuit or C-Set assignment module is to further assign a C-set element comprising filling C-Set element e_.3 to e_.P assignment for Set_1 to Set_m.

For each subsequent element of the C-Sets, the cell_score() is computed before and after adding a new unassigned cell. A cell is assigned to a C-Set when it increases the average score the most or that reduces it the least. Once the element e_.3 of each C-Set is assigned, the process continues with element e_.4 of each C-Set and so on.

An optional sub-step of the fifth step is that if the max number of set is < than max number of BBUs available, a new Set_m+1 can be added when a given cell only diminishes the score of all current Sets (by a given threshold λ). In this case a new Set_m+1 is added to the solution and the respective cell is assigned to it.

The sixth step of the claimed method as implemented in a C-Set assignment processing circuit or C-Set assignment module is to compute and evaluate the final result of the foregoing steps. The result of the foregoing steps is evaluated with two different evaluation scores, or combination of them. The cost or value of a given result is compared to another value such as another heuristic or with an optimal solution such as that obtained with a linear program solver. The evaluation score can be used for various purposes. First, it could be used to determine how the current cell assignment compares to another one such as one obtained using manual configuration, another heuristic, or a solver. Since this is an NP-hard problem, the comparison with an exact solution obtained from a mathematical program solver (e.g. CPLEX) will only work for small size problems. The other alternative is to use the heuristic with certain variations, such as starting the algorithm with another randomly selected cell and then selecting the assignment with the best evaluation score. It could also be used to explore the solution space as further described herein.

The result can be evaluated (E_Score_1) by using the UL path loss matrix. That is, path loss is equated to the loss between UE and antenna in dB. With UL CoMP, the receive power is increased, hence path loss is decreased. The average decrease in path loss of all UEs from the input RF data can be computed before the C-Set cell assignment and after the C-Set cell assignment method described above. Hence, E_Score_1 is the average decrease in path loss of all UEs. This value will determine the overall effectiveness of the cell assignment to coordination sets with respect to its impact on the actual effectiveness of coordination. This value will indicate how effective the UL CoMP has become with the given cell to C-Set assignment.

Alternatively, the result can be evaluated (E_Score_2) with the DL CoMP. If muting is assumed, receive power can be calculated for a source RRU (cell). ((energy (RSRP) received in 1st cell and 2nd cell of the C-Set)/RSRP of interferer cells not in C-Set). The E_Score_2 is the ratio of source cell(s)/interferers (geometric factor) and determines if the cell assignment to C-Sets has been efficient in reducing the DL interference by coordinating the right cells in the same C-Set. A further embodiment takes a combination of both E_Score_1 and E_Score_2 or a weighted combination of the two. These are two example evaluation score parameters and other similar parameters can be derived from other performance metrics.

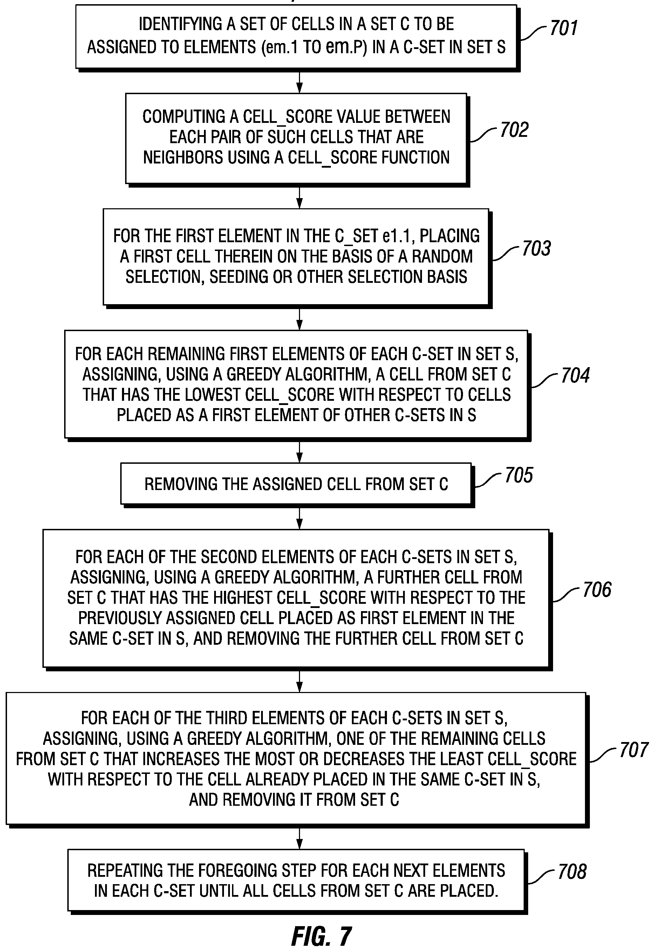

Referring to the flow chart of Figure 7, as seen therein, the following steps of the invention can be performed by any of the following as depicted as 800 of Figure 800: an electronic device coupled to a network including a plurality of cells associated with a radio resource unit (RRU), wherein each cell is to be assigned to elements (em.P) of a coordination set ("C-Set") associated with at least one BBU or a network device having a coordination set (C-Set) assignment processor resident on a platform within a BBU or a controller operable to control one or a plurality of BBUs and associated cells and operable to assign each or a subset of the plurality of cells to one of a plurality of elements (em.P) of a plurality of C-Sets, each C-Set associated with at least one BBU; or a network device configured to coordinate the assignment of a cell associated with a remote radio unit (RRU) to a broadband processing unit (BBU) using a coordination set (C-Set), the network device having a set of one or more processors; and a non-transitory machine-readable storage medium, which when executed by the set of one or more processors, causes the network device to initiate deployment of a virtual C-Set assignment module on a node in a network; or a non-transitory machine-readable medium having computer code stored therein, which when executed by a set of one or more processors of a network device communicatively coupled to a remote radio unit (RRU) associated with a cell.

In step 701, the algorithm identifies a set of cells in a set C to be assigned to elements (em.P) in a C-Set in Set S. In step 702, a cell_score value is computed between each pair of such cells that are neighbors using a cell_score function. In step 703, for the first element in the C_Set, e 1.1, a first cell is placed therein based on a random selection, seeding or other selection basis. In step 704, for each of the remaining first elements of each C-Set in set S, using a greedy algorithm, a cell is assigned from Set C that has the lowest cell_score with respect to cells placed as a first element of other C-Sets in S. In step 705, the assigned cell is removed from set C. In step 706, for each of the second elements of each C-Set in set S and using a greedy algorithm, a further cell is assigned from set C that has the highest cell_score with respect to the previously assigned cell placed as first element in the same C-Set in S, and removing the further cell from set C. In step 707, for each of the third elements of each C-Set in set S, a greedy algorithm is used to assign, one of the remaining cells from set C that increases the most or decreases the least the cell_score with respect to the cells already placed in the same C-Set in S, and removing it from set C. In step 708, the foregoing step are repeated for each next element in each C-Set until all cells from set C are placed.

The cost or value of a given result can also be used for search space heuristics based on meta-heuristics such as Tabu search. Tabu search is a metaheuristic search method employing local search methods used for mathematical optimization. Local (neighborhood) searches take a potential solution to a problem and check its immediate neighbors in the hope of finding an improved solution. Local search methods tend to become stuck in suboptimal regions or on plateaus where many solutions are equally fit. Tabu search enhances the performance of local search by relaxing its basic rule. First, at each step worsening moves can be accepted if no improving move is available such as when the search is stuck at a strict local minimum. In addition, prohibitions are introduced to discourage the search from coming back to previously-visited solutions. The implementation of Tabu search uses memory structures that describe the visited solutions or user-provided sets of rules. If a potential solution has been previously visited within a certain short-term period or if it has violated a rule, it is marked as forbidden so that the algorithm does not consider that possibility repeatedly.

The claimed method as implemented in a C-Set assignment processing circuit or C-Set assignment module use at least one cell score variable and C-Set score functions to determine the cells that should be assigned to same C-Set to optimize network coordination.

Disclosed herein is one non-limiting method (heuristic) to assign a cell to C-Set, using evaluation scores. The evaluation scores are based on, inter alia, weights, thresholds and policy adjustments. Variants of the method can be used to further optimize C-Set assignments. In an embodiment, such C-Set assignments are rendered using a visualization tool.

The C-Set assignment processing circuit or C-Set assignment module can be embodied in a node comprising an electronic device or network device that includes hardware resources such as computing hardware (e.g., processors), storage hardware (e.g., Random Access Memory (RAM) and hard disks), and networking hardware (e.g., a network interface card (NIC)), or can be distributed across a plurality of nodes. The inputs into the C-Set assignment processing circuit or C-Set assignment module can come from a plurality of nodes communicatively coupled to the C-Set assignment processing circuit or C-Set assignment module.

The C-Set assignment processing circuit or C-Set assignment module can be embodied in an application running in a virtualized environment on a node or platform that executes a hypervisor (also known as a Virtual Machine Monitor (VMM)) that allows Virtual Machines (VMs) or other virtual appliances (e.g., unikernel) executing on such node to share the hardware resources of the node. Each VM running on hypervisor may execute its own operating system (OS) (e.g., a guest OS) and one or more applications. The OS and the applications may not know that they are running on a VM as opposed to running on a "bare metal" host device.

The C-Set assignment processing circuit or C-Set assignment module can be executed on a network device that is communicatively coupled to at least one BBU and is responsible for managing the resources of a plurality of RRUs. In one embodiment, such network device includes a cloud orchestration component. In one embodiment, the cloud orchestration component includes cloud management software. In one embodiment, the cloud orchestration component is responsible for managing the lifecycle of VMs and other virtual appliances. For example, network device may initiate deployment of new VMs in the datacenter, initiate migration of VMs, and initiate the decommissioning of existing VMs.

In one embodiment, the C-Set assignment processing circuit or C-Set assignment module is implemented as a unikernel. A unikernel is specialized virtual appliance that that can execute natively on a hypervisor without the need for a full-blown OS (e.g., Linux). A unikernel typically includes an application and a bare-minimum set of libraries that are needed to support that application. This is in contrast to a traditional VM that typically includes a complete guest OS, many of the features of which are not used by the application. Since unikernels typically have less code than traditional VMs, they have a smaller attack surface, which provides improved security properties. Further unikernels typically have reduced memory footprint and lower boot times compared to traditional VMs. It should be understood, however, that the C-Set assignment processing circuit or C-Set assignment module may be implemented using other types of virtualization techniques (e.g., as a VM) or even as a bare-metal deployment.

In one embodiment, the cloud orchestration component may generate an image of the C-Set assignment processing circuit or C-Set assignment module. The image of the C-Set assignment processing circuit or C-Set assignment module can be used as a template to initiate deployment of the C-Set assignment processing circuit or C-Set assignment module on one or more nodes. The cloud orchestration component may initiate deployment of a virtual C-Set assignment processing circuit or C-Set assignment module by transmitting the image of the virtual C-Set assignment processing circuit or C-Set assignment module to the BBU or controller node, along with instructions to execute the image. In one embodiment, the image of the virtual C-Set assignment processing circuit or C-Set assignment module is stored in an image repository or other storage location. In this case, the cloud orchestration component may initiate deployment of the virtual C-Set assignment processing circuit or C-Set assignment module on a node by transmitting, to the node, an indication of the location of the image along with instructions to execute that image. Once deployed on a node, the virtual C-Set assignment processing circuit or C-Set assignment module may perform the above referenced steps of the invention.

Some portions of the preceding detailed descriptions have been presented in terms of algorithms and symbolic representations of transactions on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present invention are not described with reference to any particular programming language. It will be appreciated that a variety of programming languages may be used to implement the teachings of embodiments of the invention as described herein.

An embodiment of the invention may be an article of manufacture in which a non-transitory machine-readable medium (such as microelectronic memory) has stored thereon instructions which program one or more data processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed data processing components and fixed hardwired circuit components.

In the foregoing specification, embodiments of the invention have been described with reference to specific exemplary embodiments thereof. It will be evident that various modifications may be made thereto without departing from the scope of the invention as set forth in the following claims. The specification and drawings are, accordingly, to be regarded in an illustrative sense rather than a restrictive sense.

Throughout the description, embodiments of the present invention have been presented through flow diagrams. It will be appreciated that the order of transactions and transactions described in these flow diagrams are only intended for illustrative purposes and not intended as a limitation of the present invention.

**Claims**

1. A method for optimizing coordination of a network, wherein the method is implemented in an electronic device coupled to the network including a plurality of cells associated with a radio resource unit, RRU, and wherein each cell is to be assigned to elements (em.P) of a coordination set, C-Set, associated with computing resources corresponding to at least one baseband unit, BBU, the method comprising:

   identifying (701) a set of cells in a set C to be assigned to elements (em.P) in a first C-Set in Set S;
   computing (702) a cell_score value between each pair of such cells that are neighbors using a cell_score function;
   for the first element e1.1 in a first C-Set placing (703) a first cell therein based on a random selection, seeding or other selection basis;
   for each of the remaining first elements of each subsequent C-Set in set S, assigning (704), using a greedy algorithm, a cell from Set C that has the lowest cell_score with respect to cells placed as a first element of other C-Sets in S;
   removing (705) the assigned cell from set C;
   for each of the second elements of each C-Set in set S, assigning (706), using a greedy algorithm, a further cell from set C that has the highest cell_score with respect to the previously assigned cell placed as first element in the same C-Set in S, and removing the further cell from set C;
   for each of the third elements of each C-Set in set S, assigning (707), using a greedy algorithm, one of the remaining cells from set C that increases the most or decreases the least the cell_score with respect to the cells already placed in the same C-Set in S, and removing it from set C; and
   repeating (708) the foregoing step for each next element in each C-Set until all cells from set C are placed, such that operation of each cell in Set C is assigned with computing resources corresponding to at least one baseband unit, BBU, associated with a C-Set in which the respective cell is placed into.

2. The method of claim 1 wherein the cell_score function takes as input a list of cells and returns the root mean square of the maximum cell score values between each pair of cells in the input list, where the cell score value between a cell i and cell j is the percentage of border overlap of the total border of cell j over cell i.

3. A method for optimizing coordination of a network, wherein the method is implemented in an electronic device coupled to a network including a plurality of cells associated with a radio resource unit, RRU, and wherein each cell is to be assigned to a coordination set, C-Set, associated with computing resources corresponding to at least one baseband unit, BBU, the method comprising:

   identifying a set of cells (C_1 to C_n) in a set C (501) to be assigned to one of a plurality of C-Sets (Set_1 to Set_m) in set S (502), wherein each such C-Set in set S has a plurality of elements (e1.1 to em.P) and each element is initialized as null;
   computing a cell_score for all cells in set C using a cell_score function; and
   based on the cell_scores, assigning each cell (C_1 to C_n) to an element (e1.1 to em.P) of each C-Set (Set_1 to Set_m), such that operation of each cell in Set C is assigned with computing resources corresponding to at least one BBU associated with a C-Set in which the respective cell is assigned to,
wherein the step of assigning each cell (C_1 to C_n) to an element (e1.1 to em.P) of each C-Set (Set_1 to Set m) (501), comprises first assigning a cell (C_1 to C_n) to the first element (e1.1 to em.1) (502) position of each C-Set (Set_1 to Set_m) comprising the step of for C-set element (e1.1 to em.1) assignment (root cell 1), using a greedy algorithm to assign the cells that have the lowest score with respect to each other neighboring cell using a cell_score function to determine the cell_score of such cells with respect to each other.

4. The method of claim 3, wherein the cell score function determines the score for each group of cells as follows:

for Set_1: e1.1 select a cell (C_1 to C_n) (501) (502) randomly or using a seed value;
for Set_2: e2.1 select the cell among n-1 remaining cells (n-1) which gives the lowest cell_score with respect to e1.1 by calling the cell_score function for each of the remaining cells (n-1), such that assuming C_1 is assigned as e1.1, the cell_score function will return as follows: v1 = cell_score(C_1, C_2); v2 = cell_score(C_1, C_3), v3 = cell_score(C_1,C_4)......vn-1= cell_score(C_1,C_n) and for each of v1...vn-1, the lowest value of v1 to vn-1 will determine the cell that will be assigned to e2.1 position.

5. The method of claim 4, wherein the same process is applied to the remaining cells (n-2) such that for Set_3, e3.1 is select from among n-2 remaining cells which gives the lowest cell_score with respect to e1.1 and e2.1 (502).

6. The method of claim 4, wherein the process is continued until all e1.1 to em.1 positions (502) are filled with a cell.

7. The method of claim 6, wherein a cell_score function is called before adding a cell and after a cell is to be added cell to determine the extent to which a cell score was decreased or increased, if any.

8. The method of claim 7, comprising the step of assigning remaining cells in a C-set to the second element (e1.2 to em.2) position of each C-Set (Set_1 to Set_m).

9. The method of claim 8, further comprising the step of assigning cells to C-Set elements e1.2 to em.2 (root cell 2) by using a greedy algorithm to assign the cells that have the highest score with respect to the cell that previously was assigned in e1.1 to em.1 (root cell 1) using the cell_score function.

10. The method of claim 9, further comprising the step of assigning a C-set element comprising filling C-Set element e_.3 to e_.P assignment for Set_1 to Set_m.

11. The method of claim 9, wherein a cell is assigned to a C-Set when it increases the average score the most or that reduces it the least.

12. The method of claim 11, further comprising comparing the results of the assignment of the cells to the C-Sets using another heuristic or with an optimal solution such as that obtained with a linear program solver.

13. An electronic device configured to optimize coordination of a network by coordinating the assignment of a plurality of cells associated with a remote radio unit, (RRU, to elements (em.P) of a coordination set, C-Set, associated with computing resources corresponding to at least one broadband unit, BBU,, the electronic device (800) comprising:

a set of one or more processors; and
a non-transitory machine-readable storage medium, which when executed by the set of one or more processors, causes the network device to initiate deployment of a virtual C-Set assignment module on a node in the network, wherein the virtual C-Set assignment module is operable to:

identify set of cells in a set C to be assigned to elements (em.P) in a C-Set in Set S;
compute a cell_score value between each pair of such cells that are neighbors using a cell_score function;
for the first element in a first C-Set, e1.1, place a first cell therein based on a random selection, seeding or other selection basis;
for each of the remaining first elements of each subsequent C-Set in set S, assign using a greedy algorithm, a cell from Set C that has the lowest cell_score with respect to cells placed as a first element of other C-Sets in S;
remove the assigned cell from set C;
for each of the second elements of each C-Set in set S, assign, using a greedy algorithm, a further cell from set C that has the highest cell_score with respect to the previously assigned cell placed as first element in the same C-Set in S, and removing the further cell from set C;

for each of the third elements of each C-Set in set S, assign, using a greedy algorithm, one of the remaining cells from set C that increases the most or decreases the least the cell_score with respect to the cells already placed in the same C-Set in S, and removing it from set C; and

repeat the foregoing step for each next element in each C-Set until all cells from set C are placed, such that operation of each cell in Set C is assigned with computing resources corresponding to at least one BBU associated with a C-Set in which the respective cell is placed into.

14. The electronic device of claim 13 wherein the cell_score function takes as input a list of cells and returns the root mean square of the maximum cell score values between each pair of cells in the input list, where the cell score value between a cell i and cell j is the percentage of border overlap of the total border of cell j over cell i.

15. A non-transitory machine-readable medium having computer code stored therein, which when executed by a set of one or more processors of a network device communicatively coupled to a remote radio unit, RRU, associated with a plurality of cells, is operable to cause the network device to:

identify set of cells in a set C to be assigned to elements (em.P) in a C-Set (501) in Set S (502);
compute a cell_score value between each pair of such cells that are neighbors using a cell_score function;
for the first element e1.1 in a first C-Set, place a first cell therein based on a random selection, seeding or other selection basis;
for each of the remaining first elements of each subsequent C-Set in set S, assign using a greedy algorithm, a cell from Set C that has the lowest cell_score with respect to cells placed as a first element of other C-Sets in S; remove the assigned cell from set C;
for each of the second elements of each C-Set in set S, assign, using a greedy algorithm, a further cell from set C that has the highest cell_score with respect to the previously assigned cell placed as first element in the same C-Set in S, and removing the further cell from set C;
for each of the third elements of each C-Set in set S, assign, using a greedy algorithm, one of the remaining cells from set C that increases the most or decreases the least the cell_score with respect to the cells already placed in the same C-Set in S, and removing it from set C; and
repeat the foregoing step for each next element in each C-Set until all cells from set C are placed, such that operation of each cell in Set C is assigned with computing resources corresponding to at least one baseband unit associated with a C-Set in which the respective cell is placed into.

16. The non-transitory machine-readable medium of claim 15 wherein the cell_score function takes as input a list of cells and returns the root mean square of the maximum cell score values between each pair of cells in the input list, where the cell score value between a cell i and cell j is the percentage of border overlap of the total border of cell j over cell i.

**Patentansprüche**

1. Verfahren zur Optimierung der Koordination eines Netzwerks, wobei das Verfahren in einer elektronischen Vorrichtung implementiert wird, die mit dem Netzwerk gekoppelt ist, das eine Mehrzahl von Zellen umfasst, die mit einer Funkressourceneinheit, RRU, assoziiert ist, und wobei jede Zelle zu Elementen (em.P) eines Koordinationssatzes, C-Satz, zugeordnet werden soll, der mit Computerressourcen assoziiert ist, die mindestens einer Basisbandeinheit, BBU, entsprechen, wobei das Verfahren umfasst:

Identifizieren (701) eines Satzes von Zellen in einem Satz C, der zu Elementen (em.P) in einem ersten C-Satz in Satz S zugeordnet werden soll;
Berechnen (702) eines cell_score-Wertes zwischen jedem Paar solcher Zellen, die Nachbarzellen sind, unter Verwendung einer cell_score-Funktion;
Platzieren (703) für das erste Element e1.1 in einem ersten C-Satz einer ersten Zelle darin basierend auf einer Zufallsauswahl-, Anfangswerteingabe- oder anderen Auswahlbasis;
Zuordnen (704) für jedes der restlichen ersten Elemente jedes nachfolgenden C-Satzes in Satz S einer Zelle aus Satz C, die den niedrigsten cell_score in Bezug auf Zellen aufweist, die als ein erstes Element von anderen C-Sätzen in S platziert sind, unter Verwendung eines gierigen Algorithmus;
Entfernen (705) der zugeordneten Zelle aus Satz C;

Zuordnen (706) für jedes der zweiten Elemente jedes C-Satzes in Satz S einer weiteren Zelle aus Satz C, die den höchsten cell_score in Bezug auf die vorher zugeordnete Zelle aufweist, die als erstes Element im gleichen C-Satz in S platziert ist, unter Verwendung eines gierigen Algorithmus und Entfernen der weiteren Zelle aus Satz C;

Zuordnen (707) für jedes der dritten Elemente jedes C-Satzes in Satz S einer der restlichen Zellen aus Satz C, die den cell_score in Bezug auf die Zellen, die bereits im gleichen C-Satz in S platziert sind, am meisten erhöht oder am wenigsten reduziert, unter Verwendung eines gierigen Algorithmus und Entfernen derselben aus Satz C; und

Wiederholen (708) des vorhergehenden Schrittes für jedes nächste Element in jedem C-Satz, bis alle Zellen aus Satz C platziert sind, derart dass dem Betrieb jeder Zelle in Satz C Computerressourcen zugeordnet werden, die mindestens einer Basisbandeinheit, BBU, entsprechen, die mit einem C-Satz assoziiert ist, in welchem die jeweilige Zelle platziert ist.

2. Verfahren nach Anspruch 1, wobei die cell_score-Funktion als Eingabe eine Liste von Zellen nimmt und den quadratischen Mittelwert der maximalen Zellenscore-Werte zwischen jedem Paar von Zellen in der Eingabeliste zurückgibt, wobei der Zellenscore-Wert zwischen einer Zelle i und einer Zelle j der Prozentsatz von Randüberlappung des gesamten Randes von Zelle j über Zelle i ist.

3. Verfahren zur Optimierung der Koordination eines Netzwerks, wobei das Verfahren in einer elektronischen Vorrichtung implementiert wird, die mit einem Netzwerk gekoppelt ist, das eine Mehrzahl von Zellen umfasst, die mit einer Funkressourceneinheit, RRU, assoziiert ist, und wobei jede Zelle zu einem Koordinationssatz, C-Satz, zugeordnet werden soll, der mit Computerressourcen assoziiert ist, die mindestens einer Basisbandeinheit, BBU, entsprechen, wobei das Verfahren umfasst:

Identifizieren eines Satzes von Zellen (C_1 bis C_n) in einem Satz C (501), der zu einem von einer Mehrzahl von C-Sätzen (Set_1 bis Set_m) in Satz S (502) zugeordnet werden soll, wobei jeder solche C-Satz in Satz S eine Mehrzahl von Elementen (e1.1 bis em.P) aufweist, und jedes Element als null initialisiert wird;

Berechnen eines cell_score für alle Zellen in Satz C unter Verwendung einer cell_score-Funktion; und

Zuordnen jeder Zelle (C_1 bis C_n) basierend auf den cell_score zu einem Element (e1.1 bis em.P) jedes C-Satzes (Set_1 bis Set_m), derart dass dem Betrieb jeder Zelle in Satz C Computerressourcen zugeordnet werden, die mindestens einer BBU entsprechen, die mit einem C-Satz assoziiert ist, in welchem die jeweiligen Zelle dazu zugeordnet ist,

wobei der Schritt des Zuordnens jeder Zelle (C_1 bis C_n) zu einem Element (e1.1 bis em.P) jedes C-Satzes (Set_1 bis Set_m) (501) ein erstes Zuordnen einer Zelle (C_1 bis C_n) zur ersten Element (e1.1 bis em.1) (502)-Position jedes C-Satzes (Set_1 bis Set_m) umfasst, umfassend zur C-Satz-Element (e1.1 bis em.1)-Zuordnung (Stammzelle 1) den Schritt des Verwendens eines gierigen Algorithmus zum Zuordnen der Zellen, die den niedrigsten Score in Bezug auf jede andere Nachbarzelle aufweisen, unter Verwendung einer cell_score-Funktion zum Bestimmen des cell_score solcher Zellen in Bezug aufeinander.

4. Verfahren nach Anspruch 3, wobei die Zellenscore-Funktion den Score für jede Gruppe von Zellen bestimmt, wie folgt:

für Satz 1: e1.1
Auswählen einer Zelle (C_1 bis C_n) (501) (502) nach dem Zufallsprinzip oder unter Verwendung eines Anfangswerts;
für Satz 2: e2.1
Auswählen der Zelle unter n - 1 restlichen Zellen (n - 1), die den niedrigsten cell_score in Bezug auf e1.1 ergibt, durch Aufrufen der cell_score-Funktion für jede der restlichen Zellen (n - 1), derart dass in der Annahme, dass C_1 als e1.1 zugeordnet wird, die cell_score-Funktion zurückgibt, wie folgt: v1 = cell_score(C_1, C_2); v2 = cell_score (C1, C_3), v3 = cell_score (C_1, C_4)...vn - 1 = cell_score (C_1, C_n), und für jedes von v1...vn - 1 der niedrigste Wert von v1 bis vn - 1 die Zelle bestimmt, die der e2.1-Position zugeordnet wird.

5. Verfahren nach Anspruch 4, wobei der gleiche Prozess auf die restlichen Zellen (n - 2) angewendet wird, derart dass für Set_3 e3.1 unter n - 2 restlichen Zellen ausgewählt wird, welche den niedrigsten cell_score in Bezug auf e1.1 und e2.1 (502) ergibt.

6. Verfahren nach Anspruch 4, wobei der Prozess fortgesetzt wird, bis alle e1.1- bis em.1-Positionen (502) mit einer Zelle gefüllt sind.

**7.** Verfahren nach Anspruch 6, wobei, bevor eine Zelle hinzugefügt wird und nachdem eine Zelle eine hinzugefügte Zelle sein soll, eine cell_score-Funktion aufgerufen wird, um das Ausmaß zu bestimmen, bis zu welchem eine Zellenscore reduziert oder erhöht wurde, wenn überhaupt.

**8.** Verfahren nach Anspruch 7, umfassend den Schritt des Zuordnens von restlichen Zellen in einem C-Satz zur zweiten Element (e1.2 bis em.2)-Position jedes C-Satzes (Set_1 bis Set_m).

**9.** Verfahren nach Anspruch 8, ferner umfassend den Schritt des Zuordnens von Zellen zu C-Satz-Elementen e1.2 bis em.2 (Stammzelle 2) durch Verwenden eines gierigen Algorithmus zum Zuordnen der Zellen, die den höchsten Score in Bezug auf die Zelle aufweisen, die vorher in e1.1 bis em.1 (Stammzelle 1) unter Verwendung der cell_score-Funktion zugeordnet wurde.

**10.** Verfahren nach Anspruch 9, ferner umfassend den Schritt des Zuordnens eines C-Satz-Elements, umfassend ein Füllen von C-Satz-Element e_.3 bis e_.P-Zuordnung für Set_1 bis Set_m.

**11.** Verfahren nach Anspruch 9, wobei eine Zelle zu einem C-Satz zugeordnet wird, wenn sie den mittleren Score am meisten erhöht oder ihn am wenigstens reduziert.

**12.** Verfahren nach Anspruch 11, ferner umfassend ein Vergleichen der Ergebnisse der Zuordnung der Zellen zu den C-Sätzen unter Verwendung einer anderen Heuristik oder mit einer optimalen Lösung wie beispielsweise jener, die mit einem linearen Programmlöser erhalten wird.

**13.** Elektronische Vorrichtung, die so konfiguriert ist, dass sie Koordination eines Netzwerks optimiert, indem sie die Zuordnung einer Mehrzahl von Zellen, die mit einer abgesetzten Funkeinheit, RRU, assoziiert ist, zu Elementen (em.P) eines Koordinationssatzes, C-Satz, koordiniert, der mit Computerressourcen assoziiert ist, die mindestens einer Breitbandeinheit, BBU, entsprechen, wobei die elektronische Vorrichtung (800) umfasst:

einen Satz eines oder mehrerer Prozessoren; und
ein nicht-transitorisches, maschinenlesbares Speichermedium, das bei Ausführung durch den Satz eines oder mehrerer Prozessoren die Netzwerkvorrichtung zum Initiieren der Bereitstellung eines virtuellen C-Satz-Zuordnungsmoduls auf einem Knoten im Netzwerk veranlasst, wobei das virtuelle C-Satz-Zuordnungsmodul ausgelegt ist zum:

Identifizieren eines Satzes von Zellen in einem Satz C, der zu Elementen (em.P) in einem C-Satz in Satz S zugeordnet werden soll;
Berechnen eines cell_score-Wertes zwischen jedem Paar solcher Zellen, die Nachbarzellen sind, unter Verwendung einer cell_score-Funktion;
Platzieren für das erste Element in einem ersten C-Satz, e1.1, einer ersten Zelle darin basierend auf einer Zufallsauswahl-, Anfangswerteingabe- oder anderen Auswahlbasis;
Zuordnen für jedes der restlichen ersten Elemente jedes nachfolgenden C-Satzes in Satz S einer Zelle aus Satz C, die den niedrigsten cell_score in Bezug auf Zellen aufweist, die als ein erstes Element von anderen C-Sätzen in S platziert sind, unter Verwendung eines gierigen Algorithmus;
Entfernen der zugeordneten Zelle aus Satz C;
Zuordnen für jedes der zweiten Elemente jedes C-Satzes in Satz S einer weiteren Zelle aus Satz C, die den höchsten cell_score in Bezug auf die vorher zugeordnete Zelle aufweist, die als erstes Element im gleichen C-Satz in S platziert ist, unter Verwendung eines gierigen Algorithmus und Entfernen der weiteren Zelle aus Satz C;
Zuordnen für jedes der dritten Elemente jedes C-Satzes in Satz S einer der restlichen Zellen aus Satz C, die den cell_score in Bezug auf die Zellen, die bereits im gleichen C-Satz in S platziert sind, am meisten erhöht oder am wenigsten reduziert, unter Verwendung eines gierigen Algorithmus und Entfernen derselben aus Satz C; und
Wiederholen des vorhergehenden Schrittes für jedes nächste Element in jedem C-Satz, bis alle Zellen aus Satz C platziert sind, derart dass dem Betrieb jeder Zelle in Satz C Computerressourcen zugeordnet werden, die mindestens einer BBU entsprechen, die mit einem C-Satz assoziiert ist, in welchem die jeweilige Zelle platziert ist.

**14.** Elektronische Vorrichtung nach Anspruch 13, wobei die cell_score-Funktion als Eingabe eine Liste von Zellen nimmt und den quadratischen Mittelwert der maximalen Zellenscore-Werte zwischen jedem Paar von Zellen in der Eingabeliste zurückgibt, wobei der Zellenscore-Wert zwischen einer Zelle i und einer Zelle j der Prozentsatz von Randüberlappung des gesamten Randes von Zelle j über Zelle i ist.

15. Nicht-transitorisches, maschinenlesbares Medium, das Computercode darauf gespeichert aufweist, der so ausgelegt ist, dass er bei Ausführung durch einen Satz eines oder mehrerer Prozessoren einer Netzwerkvorrichtung, die mit einem abgesetzten Funkeinheit, RRU, kommunikativ gekoppelt ist, die mit einer Mehrzahl von Zellen assoziiert ist, die Netzwerkvorrichtung veranlasst zum:

Identifizieren eines Satzes von Zellen in einem Satz C, der zu Elementen (em.P) in einem C-Satz (501) in Satz S (502) zugeordnet werden soll;
Berechnen eines cell_score-Wertes zwischen jedem Paar solcher Zellen, die Nachbarzellen sind, unter Verwendung einer cell_score-Funktion;
Platzieren für das erste Element e1.1 in einem ersten C-Satz einer ersten Zelle darin basierend auf einer Zufallsauswahl Anfangswerteingabe- oder anderen Auswahlbasis;
Zuordnen für jedes der restlichen ersten Elemente jedes nachfolgenden C-Satzes in Satz S einer Zelle aus Satz C, die den niedrigsten cell_score in Bezug auf Zellen aufweist, die als ein erstes Element von anderen C-Sätzen in S platziert sind, unter Verwendung eines gierigen Algorithmus;
Entfernen der zugeordneten Zelle aus Satz C;
Zuordnen für jedes der zweiten Elemente jedes C-Satzes in Satz S einer weiteren Zelle aus Satz C, die den höchsten cell_score in Bezug auf die vorher zugeordnete Zelle aufweist, die als erstes Element im gleichen C-Satz in S platziert ist, unter Verwendung eines gierigen Algorithmus und Entfernen der weiteren Zelle aus Satz C;
Zuordnen für jedes der dritten Elemente jedes C-Satzes in Satz S einer der restlichen Zellen aus Satz C, die den cell_score in Bezug auf die Zellen, die bereits im gleichen C-Satz in S platziert sind, am meisten erhöht oder am wenigsten reduziert, unter Verwendung eines gierigen Algorithmus und Entfernen derselben aus Satz C; und
Wiederholen des vorhergehenden Schrittes für jedes nächste Element in jedem C-Satz, bis alle Zellen aus Satz C platziert sind, derart dass dem Betrieb jeder Zelle in Satz C Computerressourcen zugeordnet werden, die mindestens einer Basisbandeinheit entsprechen, die mit einem C-Satz assoziiert ist, in welchem die jeweilige Zelle platziert ist.

16. Nicht-transitorisches, maschinenlesbares Medium nach Anspruch 15, wobei die cell_score-Funktion als Eingabe eine Liste von Zellen nimmt und den quadratischen Mittelwert der maximalen Zellenscore-Werte zwischen jedem Paar von Zellen in der Eingabeliste zurückgibt, wobei der Zellenscore-Wert zwischen einer Zelle i und einer Zelle j der Prozentsatz von Randüberlappung des gesamten Randes von Zelle j über Zelle i ist.

**Revendications**

1. Procédé d'optimisation de coordination d'un réseau, dans lequel le procédé est mis en œuvre dans un dispositif électronique couplé au réseau incluant une pluralité de cellules associées à une unité de ressource radio, RRU, et dans lequel chaque cellule doit être assignée à des éléments (em.P) d'un ensemble de coordination, C-Set, associé à des ressources informatiques correspondant à au moins une unité de bande de base, BBU, le procédé comprenant :

l'identification (701) d'un ensemble de cellules dans un C-Set à assigner à des éléments (em.P) dans un premier C-Set dans un ensemble S ;
le calcul (702) d'une valeur cell_score entre chaque paire de telles cellules qui sont voisines en utilisant une fonction cell_score ;
pour le premier élément e1.1 dans un premier C-Set, le placement (703) d'une première cellule à l'intérieur de celui-ci sur la base d'une sélection aléatoire, d'un ensemencement ou d'une autre sélection ;
pour chacun des premiers éléments restants de chaque C-Set suivant dans un ensemble S, l'assignation (704), en utilisant un algorithme glouton, d'une cellule d'un C-Set qui a le cell_score le plus bas par rapport à des cellules placées en tant qu'un premier élément d'autres C-Sets dans l'ensemble S ;
la suppression (705) de la cellule assignée du C-Set ;
pour chacun des deuxièmes éléments de chaque C-Set dans l'ensemble S, l'assignation (706), en utilisant un algorithme glouton, d'une autre cellule du C-Set qui a le cell_score le plus haut par rapport à la cellule précédemment assignée placée en tant qu'un premier élément dans le même C-Set dans l'ensemble S, et la suppression de l'autre cellule du C-Set ;
pour chacun des troisièmes éléments de chaque C-Set dans l'ensemble S, l'assignation (707), en utilisant un algorithme glouton, de l'une des cellules restantes du C-Set qui augmente le plus ou diminue le moins le cell_score par rapport aux cellules déjà placées dans le même C-Set dans l'ensemble S, et la suppression de celle-ci du C-Set ; et

la répétition (708) de l'étape précédente pour chaque élément suivant dans chaque C-Set jusqu'à ce que toutes les cellules du C-Set soient placées, de sorte qu'une opération de chaque cellule dans le C-Set soit assignée avec des ressources informatiques correspondant à au moins une unité de bande de base, BBU, associée à un C-Set dans lequel la cellule est placée.

2. Procédé selon la revendication 1, dans lequel la fonction cell_score prend, en tant qu'entrée, une liste de cellules et retourne la moyenne quadratique des valeurs maximales de cell_score entre chaque paire de cellules dans la liste d'entrée, où la valeur de cell_score entre une cellule i et une cellule j est le pourcentage de chevauchement de frontière de la frontière totale de la cellule j sur la cellule i.

3. Procédé d'optimisation de coordination d'un réseau, dans lequel le procédé est mis en œuvre dans un dispositif électronique couplé à un réseau incluant une pluralité de cellules associées à une unité de ressource radio, RRU, et dans lequel chaque cellule doit être assignée à un ensemble de coordination, C-Set, associé à des ressources informatiques correspondant à au moins une unité de bande de base, BBU, le procédé comprenant :

l'identification d'un ensemble de cellules (C_1 à C_n) dans un C-Set (501) à assigner à l'un d'une pluralité de C-Sets (Set_1 à Set_m) dans un ensemble S (502), dans lequel chaque tel C-Set dans l'ensemble S a une pluralité d'éléments (e1.1 à em.P) et chaque élément est initialisé en tant que nul ;

le calcul d'un cell_score pour toutes les cellules dans le C-Set en utilisant une fonction cell_score ; et

sur la base des cell_scores, l'assignation de chaque cellule (C_1 à C_n) à un élément (e1.1 à em.P) de chaque C-Set (Set_1 à Set_m), de sorte qu'une opération de chaque cellule dans le C-Set soit assignée à des ressources informatiques correspondant à au moins une BBU associée à un C-Set dans lequel la cellule respective est assignée,

dans lequel l'étape de l'assignation de chaque cellule (C_1 à C_n) à un élément (e1.1 à em.P) de chaque C-Set (Set_1 à Set_m) (501) comprend d'abord l'assignation d'une cellule (C_1 à C_n) à la position du premier élément (e1.1 à em.P) (502) de chaque C-Set (Set_1 à Set_m) comprenant l'étape de, pour chaque assignation d'élément de C-Set (e1.1 à em.1) (root cell 1), l'utilisation d'un algorithme glouton pour assigner les cellules qui ont le score le plus bas par rapport à chaque autre cellule voisine en utilisant une fonction cell_score pour déterminer le cell_score de telles cellules l'une par rapport à l'autre.

4. Procédé selon la revendication 3, dans lequel la fonction cell_score détermine le score pour chaque groupe de cellules comme suit :

pour Set_1 : e1.1
sélectionner une cellule (C_1 à C_n) (501) (502) aléatoirement ou en utilisant une valeur de semence ;
pour Set_2 : e2.1
sélectionner la cellule parmi n-1 cellules restantes (n-1) qui donne le cell_score le plus bas par rapport à e1.1 en appelant la fonction cell_score pour chacune des cellules restantes (n-1), de sorte que, en supposant que C_1 est assigné en tant que e1.1, la fonction cell_score retourne ce qui suit : v1 = cell_score(C_1, C_2) ; v2 = cell_score (C_1, C_3) ; v3 = cell_score (C_1, C_4)... vn-1 = cell_score(C_1, C_n) ; et pour chacune de v1... vn-1, la valeur la plus basse de v1 à vn-1 détermine la cellule à assigner à la position e2.1.

5. Procédé selon la revendication 4, dans lequel le même processus est appliqué aux cellules restantes (n-2) de sorte que pour Set_3, e3.1 soit sélectionné parmi n-2 cellules restantes pour donner le cell_score le plus bas par rapport à e1.1 et e2.1 (502).

6. Procédé selon la revendication 4, dans lequel le processus est continué jusqu'à ce que toutes les positions e1.1 à em.1 (502) soient remplies avec une cellule.

7. Procédé selon la revendication 6, dans lequel une fonction cell_score est appelée avant d'ajouter une cellule et après avoir ajouté une cellule pour déterminer dans quelle mesure un cell_score a augmenté ou diminué, le cas échéant.

8. Procédé selon la revendication 7, comprenant l'étape de l'assignation de cellules restantes dans un C-Set à la position du deuxième élément (e1.2 à em.2) de chaque C-Set (Set_1 à Set_m).

9. Procédé selon la revendication 8, comprenant en outre l'étape de l'assignation de cellules à des éléments e1.2 à em.2 (root_cell 2) du C-Set en utilisant un algorithme glouton pour assigner les cellules qui ont le score le plus haut par rapport à la cellule qui a été précédemment assignée dans e1.1 à em.1 (root_cell 1) en utilisant la fonction cell_score.

10. Procédé selon la revendication 9, comprenant en outre l'étape de l'assignation d'un élément de C-Set comprenant le remplissage d'un élément e_.3 de C-Set dans l'assignation e_.P pour Set_1 à Set_m.

11. Procédé selon la revendication 9, dans lequel une cellule est assignée à un C-Set lorsqu'elle augmente le plus ou réduit le moins le score moyen.

12. Procédé selon la revendication 11, comprenant en outre la comparaison des résultats de l'assignation des cellules aux C-Sets en utilisant une autre heuristique ou à une solution optimale telle que celle obtenue avec un solveur de programme linéaire.

13. Dispositif électronique configuré pour optimiser une coordination d'un réseau par la coordination de l'assignation d'une pluralité de cellules associées à une unité radio distante, RRU, à des éléments (em.P) d'un ensemble de coordination, C-Set, associé à des ressources informatiques correspondant à au moins une unité de bande large, BBU, le dispositif électronique (800) comprenant :

   un ensemble d'un ou plusieurs processeurs ; et
   un support de stockage lisible par machine non transitoire qui, lorsqu'il est exécuté par l'ensemble d'un ou plusieurs processeurs, amène le dispositif de réseau à lancer un déploiement d'un module d'assignation de C-Set virtuel sur un nœud dans le réseau, dans lequel le module d'assignation de C-Set virtuel est utilisable pour :

      identifier un ensemble de cellules dans un C-Set à assigner à des éléments (em.P) dans un C-Set dans un ensemble S ;
      calculer une valeur cell_score entre chaque paire de telles cellules qui sont voisines en utilisant une fonction cell_score ;
      pour le premier élément e1.1 dans un premier C-Set, placer une première cellule à l'intérieur de celui-ci sur la base d'une sélection aléatoire, d'un ensemencement ou d'une autre sélection ;
      pour chacun des premiers éléments restants de chaque C-Set suivant dans un ensemble S, assigner, en utilisant un algorithme glouton, une cellule d'un C-Set qui a le cell_score le plus bas par rapport à des cellules placées en tant qu'un premier élément d'autres C-Sets dans l'ensemble S ;
      supprimer la cellule assignée du C-Set ;
      pour chacun des deuxièmes éléments de chaque C-Set dans l'ensemble S, assigner, en utilisant un algorithme glouton, une autre cellule du C-Set qui a le cell_score le plus haut par rapport à la cellule précédemment assignée placée en tant qu'un premier élément dans le même C-Set dans l'ensemble S, et supprimer l'autre cellule du C-Set ;
      pour chacun des troisièmes éléments de chaque C-Set dans l'ensemble S, assigner, en utilisant un algorithme glouton, l'une des cellules restantes du C-Set qui augmente le plus ou diminue le moins le cell_score par rapport aux cellules déjà placées dans le même C-Set dans l'ensemble S, et supprimer celle-ci du C-Set ; et
      répéter l'étape précédente pour chaque élément suivant dans chaque C-Set jusqu'à ce que toutes les cellules du C-Set soient placées, de sorte qu'une opération de chaque cellule dans le C-Set soit assignée avec des ressources informatiques correspondant à au moins une BBU associée à un C-Set dans lequel la cellule respective est placée.

14. Dispositif électronique selon la revendication 13, dans lequel la fonction cell_score prend, en tant qu'entrée, une liste de cellules et retourne la moyenne quadratique des valeurs maximales de cell_score entre chaque paire de cellules dans la liste d'entrée, où la valeur de cell_score entre une cellule i et une cellule j est le pourcentage de chevauchement de frontière de la frontière totale de la cellule j sur la cellule i.

15. Support lisible par machine non transitoire ayant un code d'ordinateur stocké dans celui-ci qui, lorsqu'il est exécuté par un ensemble d'un ou plusieurs processeurs d'un dispositif de réseau couplé, de manière à pouvoir communiquer, à une unité radio distante, RRU, associée à une pluralité de cellules, est utilisable pour amener le dispositif de réseau à :

identifier un ensemble de cellules dans un C-Set à assigner à des éléments (em.P) dans un C-Set (501) dans un ensemble S (502) ;

calculer une valeur cell_score entre chaque paire de telles cellules qui sont voisines en utilisant une fonction cell_score ;

pour le premier élément e1.1 dans un premier C-Set, placer une première cellule à l'intérieur de celui-ci sur la base d'une sélection aléatoire, d'un ensemencement ou d'une autre sélection ;

pour chacun des premiers éléments restants de chaque C-Set suivant dans un ensemble S, assigner, en utilisant un algorithme glouton, une cellule d'un C-Set qui a le cell_score le plus bas par rapport à des cellules placées en tant qu'un premier élément d'autres C-Sets dans l'ensemble S ;

supprimer la cellule assignée du C-Set ;

pour chacun des deuxièmes éléments de chaque C-Set dans l'ensemble S, assigner, en utilisant un algorithme glouton, une autre cellule du C-Set qui a le cell_score le plus haut par rapport à la cellule précédemment assignée placée en tant qu'un premier élément dans le même C-Set dans l'ensemble S, et supprimer l'autre cellule du C-Set ;

pour chacun des troisièmes éléments de chaque C-Set dans l'ensemble S, assigner, en utilisant un algorithme glouton, l'une des cellules restantes du C-Set qui augmente le plus ou diminue le moins le cell_score par rapport aux cellules déjà placées dans le même C-Set dans l'ensemble S, et supprimer celle-ci du C-Set ; et

répéter l'étape précédente pour chaque élément suivant dans chaque C-Set jusqu'à ce que toutes les cellules du C-Set soient placées, de sorte qu'une opération de chaque cellule dans le C-Set soit assignée avec des ressources informatiques correspondant à au moins une unité de bande de base associée à un C-Set dans lequel la cellule respective est placée.

16. Support lisible par machine non transitoire selon la revendication 15, dans lequel la fonction cell_score prend, en tant qu'entrée, une liste de cellules et retourne la moyenne quadratique des valeurs maximales de cell_score entre chaque paire de cellules dans la liste d'entrée, où la valeur de cell _score entre une cellule i et une cellule j est le pourcentage de chevauchement de frontière de la frontière totale de la cellule j sur la cellule i.

*FIG. 1*

201

202

COORDINATION

**FIG. 2A**

**DIFFERENT SOURCES
SCHEDULED**

205(A)

250(B)

206    COORDINATION

**FIG. 2C**

**NULL FORMING**

203

204    COORDINATION

**FIG. 2B**

**SIMULTANEOUS TRANSMISSION**

208

208

207

**FIG. 2D**

301                    300                    302

INPUT:
A) RF DATA
B) # OF C-SETS
C) MAX # OF CELLS PER C-SET
D) OTHER INPUTS

ALGORITHM 1

OUTPUT:
1. CELL TO C-SET ASSIGNMENT
303

**FIG. 3**

**FIG. 4**

LEGEND:
- y: CELL EDGE COVERAGE (e.g. in m$^2$)
- xa,b: CELL A OVERLAP WITH CELL B (e.g. in m$^2$)
- PCI: PHY-LAYER CELL ID (e.g. 0 TO 503)
*NOTE: Y AND x FOR PCI_n NOT SHOWN

SET S:
COORDINATION SETS (C-SET)
_502_

SET C:
CELLS TO BE ASSIGNED
_501_

**FIG. 5**

**FIG. 6**

IDENTIFYING A SET OF CELLS IN A SET C TO BE ASSIGNED TO ELEMENTS (em.1 TO em.P) IN A C-SET IN SET S — 701

COMPUTING A CELL_SCORE VALUE BETWEEN EACH PAIR OF SUCH CELLS THAT ARE NEIGHBORS USING A CELL_SCORE FUNCTION — 702

FOR THE FIRST ELEMENT IN THE C_SET e1.1, PLACING A FIRST CELL THEREIN ON THE BASIS OF A RANDOM SELECTION, SEEDING OR OTHER SELECTION BASIS — 703

FOR EACH REMAINING FIRST ELEMENTS OF EACH C-SET IN SET S, ASSIGNING, USING A GREEDY ALGORITHM, A CELL FROM SET C THAT HAS THE LOWEST CELL_SCORE WITH RESPECT TO CELLS PLACED AS A FIRST ELEMENT OF OTHER C-SETS IN S — 704

REMOVING THE ASSIGNED CELL FROM SET C — 705

FOR EACH OF THE SECOND ELEMENTS OF EACH C-SETS IN SET S, ASSIGNING, USING A GREEDY ALGORITHM, A FURTHER CELL FROM SET C THAT HAS THE HIGHEST CELL_SCORE WITH RESPECT TO THE PREVIOUSLY ASSIGNED CELL PLACED AS FIRST ELEMENT IN THE SAME C-SET IN S, AND REMOVING THE FURTHER CELL FROM SET C — 706

FOR EACH OF THE THIRD ELEMENTS OF EACH C-SETS IN SET S, ASSIGNING, USING A GREEDY ALGORITHM, ONE OF THE REMAINING CELLS FROM SET C THAT INCREASES THE MOST OR DECREASES THE LEAST CELL_SCORE WITH RESPECT TO THE CELL ALREADY PLACED IN THE SAME C-SET IN S, AND REMOVING IT FROM SET C — 707

REPEATING THE FOREGOING STEP FOR EACH NEXT ELEMENTS IN EACH C-SET UNTIL ALL CELLS FROM SET C ARE PLACED. — 708

*FIG. 7*

*800*

PROCESSOR(S)

C-SET ASSIGNMENT
MODULE

DISPLAY CONTROLLER AND/OR
DISPLAY DEVICE

MEMORY

PERIPHERAL INTERFACE
(e.g. CHIPSET)

*FIG. 8*

**EP 3 510 804 B1**

**Patent documents cited in the description**

- US 20110105184 A
- US 2014003049 A